Europäisches Patentamt

European Patent Office

Office européen des brevets

(19)

(11) Veröffentlichungsnummer: **0 125 323**
**B1**

(12) # EUROPÄISCHE PATENTSCHRIFT

(45) Veröffentlichungstag der Patentschrift:
15.10.86

(21) Anmeldenummer: 83104657.8

(22) Anmeldetag: 11.05.83

(51) Int. Cl.⁴: **B 62 B 1/12**

(54) **Faltbarer Transportroller.**

(43) Veröffentlichungstag der Anmeldung:
21.11.84 Patentblatt 84/47

(45) Bekanntmachung des Hinweises auf die Patenterteilung:
15.10.86 Patentblatt 86/42

(84) Benannte Vertragsstaaten:
AT BE CH DE FR GB IT LI NL SE

(56) Entgegenhaltungen:
FR-A-2 348 841
FR-A-2 418 729
GB-A-1 010 724
US-A-2 490 189
US-A-3 177 000

(73) Patentinhaber: LEIFHEIT Aktiengesellschaft,
Leifheitstrasse, D-5408 Nassau/Lahn (DE)

(72) Erfinder: Schüfer, Dieter, Windener Strasse 56,
D-5408 Nassau/Lahn (DE)

EP 0 125 323 B1

LIBER, STOCKHOLM 1986

**Beschreibung**

Die Erfindung bezieht sich auf einen faltbaren Transportroller gemäß dem Oberbegriff des Anspruchs 1.

Einen bekannten Transportroller dieser Bauart stellt die Patentschrift US-A-2490189 dar.

Derartige Transportroller, wie sie zum Beispiel durch das DE-GM 78 09 844 bekannt wurden, werden insbesondere im Haushaltsbereich verwendet. Sie dienen einmal als Träger für schwere Gepäckstücke, zum anderen werden sie mit einem Behälter versehen zum Einkaufen benutzt. Um eine vielseitige Verwendbarkeit zu garantieren, ist es zweckmäßig, sie zusammenklappbar auszubilden. Dabei ist immer der Griffholm das besondere Problem. Während das Trägerteil relativ einfach beiklappbar auszubilden ist, muß der Griffholm, um im Größenbereich des Trägerteils zu liegen, wenigstens zweifach geteilt werden. Dies geschieht bei den bekannten Geräten durch ein Mehrfachteleskop. Da eine derartige Einrichtung wirklich nur dann einen Sinn hat, wenn sie auch wirklich schnell und einfach zu bedienen ist, sind diese Teleskope recht aufwendig konstruiert. Um ein Klappern und Wackeln zu verhindern, müssen sie in einem engen Tolleranzbereich gefertigt werden. Dies verursacht zwangsläufig neben der schwierigen Montage hohe Materialkosten wegen sehr genauer Profile.

Aufgabe der Erfindung ist es, eine Einrichtung an einem Transportroller zu schaffen, die es ermöglicht, diesen praktisch mit einem Handgriff zusammenzufalten, wobei eine einfache Montage mit wenigen Einzelteilen möglich sein muß, ohne daß Profile mit zu engem Toleranzbereich verwendet werden müssen.

Diese Aufgabe wird erfindungsgemäß mit den kennzeichnenden Merkmalen des Anspruchs 1 gelöst. Durch die Kombination zweier Faltteile mit einem teleskopierbaren Verriegelungsteil, an dem das Handgriffteil angelenkt ist, sind im Griffholm keine von einem anderen Teil zu beaufschlagende Entriegelungsteile erforderlich. Es ist lediglich eine Erstentriegelung des Handgriffteiles beim Beginn des Faltvorganges erforderlich. Dadurch reduziert sich die Anzahl der Bauteile erheblich. Die Anordnung der Gelenke auf der der zu befördernden Last abgekehrten Seite bewirkt ein schlüssiges Anliegen der Bauteile aneinander, so daß auch bei Wahl eines großen Toleranzbereiches keine störenden Klappergeräusche auftreten. Die Montage ist durch die Reduzierung der Bauteile und insbesondere durch den Wegfall von Kleinteilen einfach und verwechslungssicher.

Weitere Ausgestaltungen der Erfindung sind den Unteransprüchen zu entnehmen. So kann das Mehrfachgelenk je nach Belastungsansprüchen und Designwünschen auf unterschiedliche Art ausgebildet werden. Dabei spielt auch das Material sowie die Form der einzelnen Griffholmteile eine Rolle. So kann das Mehrfachgelenk in einfachster Weise durch eine Spiral- oder Blattfeder gebildet sein. Eine optische Verbesserung bringt die Ausbildung des Mehrfachgelenkes als Scharnierband oder als Doppelhebel.

Eine besonders optisch ansprechende Lösung stellt die Ausbildung des Mehrfachgelenkes als Filmscharnier dar. Dabei kann das Verriegelungsteil und das Handgriffteil einstückig ausgeführt werden. Eine besonders einfache Montage ist die weitere Folge.

Einige Ausführungsbeispiele der Erfindung werden im folgenden an Hand der Zeichnungen näher erläutert.

Es zeigen:

Figuren 1 bis 3 schematisch einen Transportroller in Transportstellung, im Augenblick des Zusammenfaltens und in Figur 3 zusammengefaltet,

Figur 4 eine Detaillösung in einem Ausschnitt gemäß IV nach Figur 2,

Figur 5 einen Schnitt gemäß der Linie V - V in Figur 4,

Figur 6 eine Ausführung eines Griffholms mittels Vierkantrohren,

Figur 7 einen Schnitt gemäß der Linie XI - XI in Figur 6,

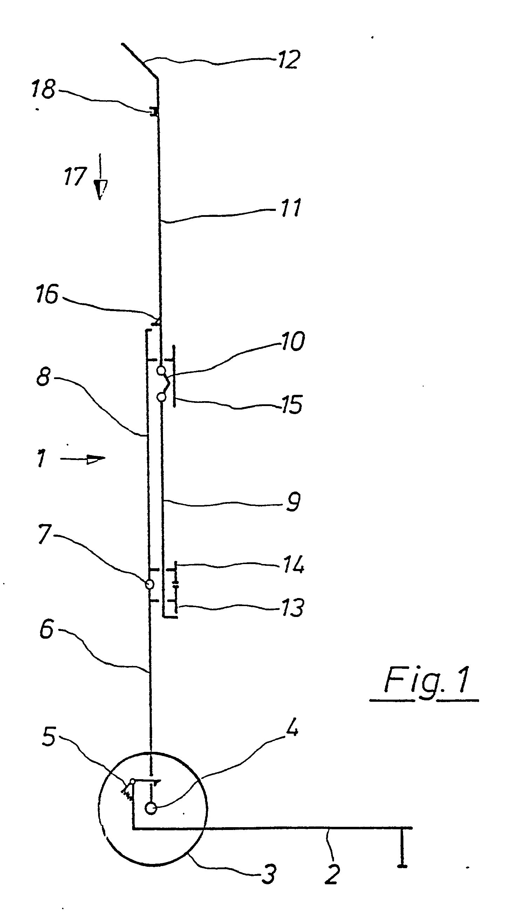

Figur 1 zeigt stark schematisiert einen Transportroller in Seitenansicht. Er besteht im wesentlichen aus einem mehrteiligen Griffholm 1, einem Trägerteil 2 und Laufräder 3, die auf einer Achse 4 befestigt sind. Die Achse 4 dient in vorliegendem Beispiel auch als Schwenkachse für das Trägerteil 2.

Mit 5 ist eine symbolhaft dargestellte Arretierung zwischen dem Trägerteil 2 und dem Griffholm 1 gekennzeichnet.

Der mehrteilige Griffholm 1 setzt sich aus einem untersten Teil 6, das über ein Gelenk 7 mit einem Mittelteil 8 verbunden ist und einem Verriegelungsteil 9, an das über ein Mehrfachgelenk 10 ein Handgriffteil 11 angelenkt ist, zusammen. Das Handgriffteil 11 endet in einem Handgriff 12. Verriegelungsteil 9 und Handgriffteil 11 sind im untersten Teil 6 und Mittelteil 8 geführt. Diese Führungen sind wiederum schematisch dargestellt und durch die Bezugszeichen 13 bis 15 gekennzeichnet. Die Führungen 13, 14 verriegeln dabei das Gelenk 7 während die Führung 15 das Mehrfachgelenk 10 blockiert.

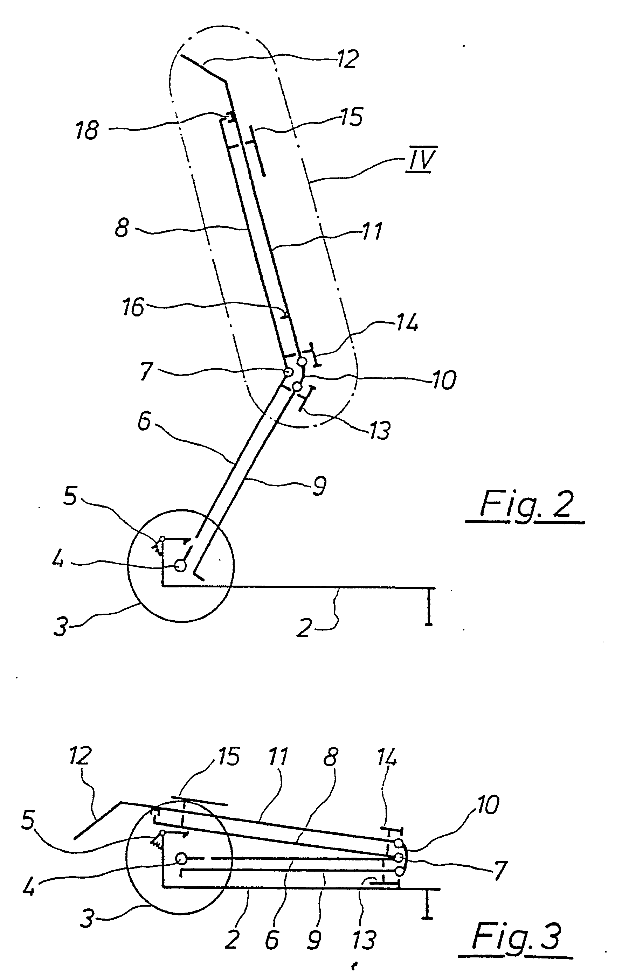

Soll nun der Transportroller aus der Gebrauchsstellung gemäß Figur 1 in die Aufbewahrungsstellung gemäß Figur 3 überführt werden, wird das Handgriffteil 11 nach

Lösung beziehungsweise überwindung einer Raste 16 in Richtung 17 bewegt bis das Mehrfachgelenk 10 über das Gelenk 7 zu liegen kommt. Wie Figur 2 verdeutlicht, ist dann nach Lösung der Arretierung 5 der Faltvorgang bis in die Stellung gemäß Figur 3 möglich. Das Handgriffteil ist in dieser Stellung gegebenenfalls durch eine weitere Raste 18 festzulegen.

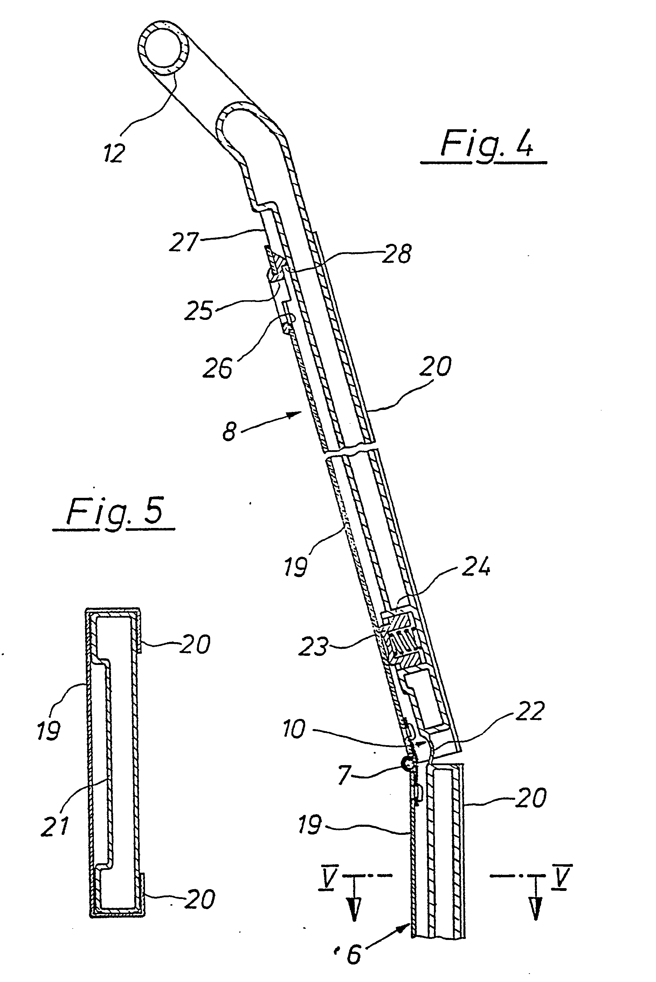

Während in den Figuren 1 bis 3 die Erfindung schematisch dargestellt ist, zeigen die Figuren 4 bis 7 eine Auswahl möglicher räumlicher Varianten. Es werden dabei für äquivalente Bauteile die gleichen Bezugszeichen wie in der schematischen Darstellung der Figuren 1 bis 3 verwendet.

In dem Ausführungsbeispiel nach der Figur 4, es wurde eine Ansicht gemäß der Figur 2 gewählt, ist das unterste Teil 6 und das Mittelteil 8 als einseitig offenes Vierkantprofil 19 ausgeführt. Es ist mit zwei Führungswangen 20 versehen, die die Führung für das als Blasteil 21 ausgeführte Verriegelungs- und Handgriffteil 9, 10, 11 bilden. Das Verriegelungsteil 9 und das Handgriffteil 11 sind über ein das Mehrfachgelenk bildendes Filmscharnier 22 einstückig miteinander verbunden. Die Raste 76 wird durch einen federbelasteten Druckknopf 23, der in einer Hülse 24 im Handgriffteil 11 geführt ist, und einer Einrasthülse 25 mit Einlaufschräge 26 im Endbereich 27 des Mittelteils 8 gebildet. Zur Aufnahme größerer Axialkräfte, insbesondere beim Ziehen des Transportwagens über Randsteine, ist an der Einrasthülse ein Anschlag 28 für die Hülse 24 vorgesehen.

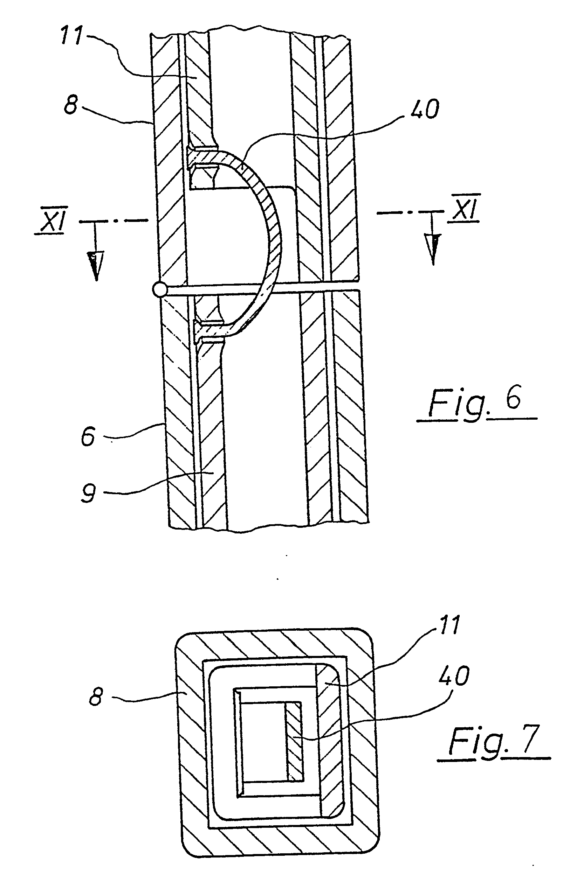

Die Figuren 6 und 7 zeigen eine Profilausbildung in Form von Vierkantrohren. Das Mehrfachgelenk 10 wird in diesem Ausführungsbeispiel durch eine Blattfeder 40 gebildet.

## Patentansprüche

1. Faltbarer Transportroller mit zwei durch Gelenke (7) verbundene, mehrteilige, an den untersten Teilen ein Trägerteil (2) tragende Griffholme (1), in denen jeweils ein ebenfalls mehrteiliges, mit einem Mehrfachgelenk (10) verbundenes, in ein Handgriffteil (11) endendes Verriegelungsteil (9) verschiebbar angeordnet ist, dadurch gekennzeichnet daß die Griffholme als Zentralholm ausgeführt, aus zwei auf der dem Trägerteil (2) abgekehrten Seite über eines der Gelenke (7) verbundenen einseitig offenen Profilen (19) mit Führungswangen (20) bestehen, wobei in dem Zentralholm das Verriegelungsteil, ebenfalls zweiteilig ausgeführt, geführt ist, zur Verriegelung der Gelenke (7) das Verriegelungsteil (9) vorgesehen ist das Handgriffteil 11 als Holmverlängerung ausgebildet ist und beide Teile als Vierkantprofil, durch ein Scharnierband (22) verbunden, ausgeführt sind.

2. Faltbarer Transportroller nach Anspruch 1, dadurch gekennzeichnet, daß das Mehrfachgelenk (10) durch eine Feder (40, 41) gebildet ist.

3. Faltbarer Transportroller nach Anspruch 1, dadurch gekennzeichnet, daß das Mehrfachgelenk (10) durch ein Filmscharnier (22) gebildet ist.

4. Faltbarer Transportroller nach Anspruch 3, dadurch gekennzeichnet, daß das Vierkantprofil einseitig offen ist.

5. Faltbarer Transportroller nach Anspruch 3, dadurch gekennzeichnet, daß das Vierkantprofil als Blasteil (21) ausgebildet ist (Figur 4, 5).

## Claims

1. Foldable transport trolley having two multipiece gripping spars which are connected by articulations (7) and carry a supporting part (2) at the lowermost parts and in which a likewise multipiece locking part (9) is displaceably arranged which is connected to a multiple articulation (10) and terminates in a handle part (11), characterized in that the gripping spars, made as a central spar, consist of two sections (19) which are open on one side, are connected on the side facing away from the supporting part (2) via one of the articulations (7) and have guide cheeks (20), with the locking part, also made in two pieces, being guided in the central spar, the locking part (9) being provided for locking the articulations (7), the handle part 11 being designed as a spar extension and both parts being made as a square section connected by a hinge band (22).

2. Foldable transport trolley according to Claim 1, characterized in that the multiple articulation (10) is formed by a spring (40, 41).

3. Foldable transport trolley according to Claim 1, characterized in that the multiple articulation (10) is formed by a film hinge (22).

4. Foldable transport trolley according to claim 3, characterized in that the square section is open on one side.

5. Foldable transport trolley according to claim 3, characterized in that the square section is made as a blow moulding (21) (Figs. 4,5).

## Revendications

1. Diable repliable comprenant deux tiges de prise (1) en plusieurs parties, reliées par des articulations (7), munies d'un support (2) dans la partie la plus inférieure et dans chacune desquelles une pièce de verrouillage (9) également en plusieurs parties, reliée à une articulation multiple (10) et se terminant par une pièce de poignée (11), est disposée à l'état déplaçable, caractérisé en ce que les tiges de prise conçues comme une tige centrale se composent de deux profilés (19) ouverts unilatéralement, dotés de joues de guidage (20) et reliés à l'une des articulations (7) du côté éloigné du support (2), la pièce de verrouillage, également réalisée en deux parties, étant montée dans la tige centrale, la pièce de verrouillage (9) étant prévue pour le verrouillage des articulations (7), la pièce de poignée (11) étant conçue comme un prolongement de le tige et les deux pièces étant réalisées comme un profilé carré, à l'état raccordé par une sangle-charnière (22).

2. Diable repliable selon la revendication 1, caractérisé en ce que l'articulation multiple (10) est constituée d'un ressort (40, 41).

3. Diable repliable selon la revendication 1, caractérisé en ce que l'articulation (10) se compose d'une charnière (22) du type pellicule.

4. Diable repliable selon la revendication 3, caractérisé en ce que le profilé carré est ouvert unilatéralement.

5. Diable repliable selon la revendication 3, caractérisé en ce que le profilé carré est conçu comme une pièce soufflée (21) (figures 4 et 5).

_Fig.1_

*Fig. 2*

*Fig. 3*

A 308

_Fig. 4_

_Fig. 5_

A 308

11

8

40

$\overline{XI}$ —·— —·— $\overline{XI}$

_Fig. 6_

6

9

11

8

40

_Fig. 7_